# EUROPÄISCHE PATENTSCHRIFT

(11) **EP 3 269 052 B1**
(45) Veröffentlichungstag und Bekanntmachung des Hinweises auf die Patenterteilung: **11.09.2019**
(21) Anmeldenummer: 16706159.7
(22) Anmeldetag: 16.02.2016
(51) Int. Cl.: H04B 7/185

(54) **FUNKÜBERTRAGUNG ZWISCHEN EINEM FLUGZEUG UND SEINER UMGEBUNG DURCH DIE FENSTER DES FLUGZEUGS.**
RADIO TRANSMISSION BETWEEN AN AIRCRAFT AND ITS SURROUNDINGS THROUGH THE WINDOWS OF THE AIRCRAFT.
RADIO TRANSMISSION ENTRE UN AVION ET SON ENVIRONNEMENT À TRAVERS LES FENÈTRES DE L'AVION.

(30) Priorität: 12.03.2015 DE 102015204463
(43) Veröffentlichungstag der Anmeldung: 17.01.2018
(73) Patentinhaber: Lufthansa Systems GmbH & Co. KG, 65479 Raunheim (DE)
(72) Erfinder: LIEBE, Jörg, 65191 Wiesbaden (DE); HOMMEL, Peter, 61348 Bad Homburg (DE)
(74) Vertreter: dompatent von Kreisler Selting Werner - Partnerschaft von Patent- und Rechtsanwälten mbB
(86) Internationale Anmeldenummer: PCT/EP2016/053277
(87) Internationale Veröffentlichungsnummer: WO 2016/142133

(56) Entgegenhaltungen:
- EP-A2- 2 355 560
- WO-A1-2015/110485
- US-A1- 2002 016 168
- US-A1- 2003 032 426
- US-A1- 2006 270 470

## Beschreibung

Die Erfindung betrifft ein Verfahren zum Übertragen von Daten aus einem Großraumverkehrsflugzeug.

Typischerweise werden Daten per Funk zwischen einem Großraumverkehrsflugzeug und einer Bodenstation oder anderen Flugzeugen übertragen. Die Reichweite einer solchen Funkdatenübertragung ist begrenzt auf die Funkreichweite. Es ist weiterhin bekannt, dass moderne Großraumverkehrsflugzeuge per Funk mit Satelliten kommunizieren, um während des Fluges zu telefonieren oder im Internet zu surfen. Hierzu sind Satellitenantennen separat außen am Flugzeug zu installieren, was technisch aufwendig und kostenintensiv ist. Eine nachträgliche Installation von solchen Satellitenantennen muss ein langwieriges und aufwendiges Zulassungsverfahren durchlaufen.

Es besteht eine Notwendigkeit ein positionsunabhängiges Senden und Empfangen von Daten mit einem Großraumverkehrsflugzeug zu ermöglichen. Von besonderer Bedeutung ist dies für eine Übertragung von Flugdaten, wie zum Beispiel Flughöhe, Fluggeschwindigkeit und Position des Flugzeuges, um in einem Notfall die Position des Flugzeuges zu kennen oder finden zu können. Mit herkömmlicher Funkkommunikation mit Bodenstationen und/oder anderen Flugzeugen ist dies nicht möglich, weil eine flächendeckende Kommunikation nicht möglich ist, beispielsweise über großen Seegebieten. Eine Nutzung von Breitband-Satellitenverbindungen ist hierfür zum einen nicht ausreichend sicher, weil Passagiere auf die Datenkommunikation zugreifen können. Zum anderen ist die derzeit eingesetzte Breitband-Satellitenkommunikation ebenfalls nicht flächendeckend verfügbar, weil auf geostationäre Satelliten im Bereich des Äquators zugegriffen wird, so dass eine Datenverbindung im Bereich der Pole nicht möglich ist. Darüber hinaus kann die Breitband-Satellitenkommunikation nur genutzt werden, wenn ein Flugzeug mit entsprechenden Sende- und Empfangseinrichtungen versehen wurde.

WO 2015/110485 A1 beschreibt eine Antenne, die in dem Deckel eines Gehäuses angeordnet ist, welches an einer glatten Fläche im Inneren eines Flugzeugs anbringbar ist. Die Antenne strahlt während der Kommunikationsverbindung durch die Bordwand des Flugzeugs und/oder durch das Antennengehäuse hindurch.

Das erfindungsgemäße Verfahren ist definiert durch die Merkmale von Patentanspruch 1.

Demnach wird in dem Flugzeug mindestens eine Sende-Empfangsantenne zur Kommunikation mit einem Satelliten im Nahbereich eines Fensters der Passagierkabine beziehungsweise des Frachtraums so positioniert, dass die Antenne eine Sichtverbindung durch das Fenster nach außen erhält, um während des Fluges eine Datenverbindung zwischen der Antenne und einem fliegenden Kommunikationshub das betreffende Fenster hindurch herzustellen und aufrechtzuerhalten. Ein fliegender Kommunikationshub kann ein Satellit, vorzugsweise ein LEO (Low Earth Orbit)-Satellit, wie zum Beispiel ein Iridiumsatellit, sein. Bei einem fliegenden Kommunikationshub kann es sich zudem auch um ein hoch fliegendes Flugzeug beziehungsweise eine hoch fliegende Drohne (HAP - High Altitude Plane) handeln. Mit dem fliegenden Kommunikationshub wird eine Datenverbindung zur Datenübertragung aufgebaut und aufrecht erhalten. Bei Großraumverkehrsflugzeugen besteht die Besonderheit, dass die Cockpitfenster besonders dick und stabil ausgebildet sind und für eine Funkkommunikation durch die Fenster hindurch nicht geeignet sind, während die Fenster der Passagierkabine oder des Frachtraums eine solche Funkkommunikation zulassen. Entscheidend ist, dass die Antenne im Nahbereich des Fensters derart angebracht wird, dass eine direkte Verbindung zwischen der Antenne und dem fliegenden Kommunikationshub durch das Fenster hindurch verläuft (Sichtverbindung), so dass die zwischen der Antenne und dem fliegenden Kommunikationshub übertragenen Funkwellen durch das Fenster hindurch übertragen werden. LEO-Satelliten, wie zum Beispiel Iridium, Global Star oder OneWeb, sind Satelliten mit erdnaher Umlaufbahn in einer Höhe von circa 200 - 2000 km. High Altitude Planes (HAP) werden als bemannte oder unbemannte Flugzeuge in Höhen von circa 20000 m geflogen und dort einem vorgegebenen Bereich zugeordnet, den sie möglichst lediglich zum Auftanken verlassen.

Vorzugsweise wird auf einander gegenüberliegenden Seiten des Flugzeugs in mindestens einem Fenster des Passagier- oder Frachtraums jeweils eine Antenne installiert, so dass mit mindestens zwei verschiedenen fliegenden Kommunikationshub eine Datenverbindung aufrechterhalten werden kann. Vorzugsweise werden die Antennen in Fenstern der Bordküche (Galley), der WCs (Lavatory) oder vor Notausgängen montiert. Dabei werden die Antennen lösbar aber fest an den Fenstern angebracht, zum Beispiel mit Hilfe eines Adapterelements, das an dem Fenster oder Fensterrahmen lösbar angebracht wird. Denkbar ist beispielsweise, dass das Adapterelement in den Fensterrahmen oder den das Fenster umgebenden Teil der Verkleidung der Bordwand geklemmt oder geklebt wird. Hierzu kann das Adapterelement mit geeigneten Klemmelementen versehen sein. Alternativ kann die Antenne und/oder das Adapterelement auf das Fenster aufgeklebt werden, sofern sich die Klebeverbindung rückstandsfrei lösen lässt.

Die Antennen können auf einfache Weise im Nahbereich des Fensters montiert werden, so dass ein nachträgliches Installieren der Antennen auch in solchen Flugzeugen möglich ist, die nicht zur Satellitenkommunikation oder Kommunikation mit hoch fliegenden Flugzeugen mit entsprechenden Sende- und Empfangsvorrichtungen am Flugzeugrumpf versehen sind.

Sämtliche Antennen stehen mit einer Routing-Einrichtung in Kommunikationsverbindung, die als separates Element an Bord des Flugzeuges untergebracht wird. Bei der Routing-Einrichtung kann es sich um ein Modem oder einen Repeater eines Computernetzwerks handeln. Die Kommunikation der Antenne mit der Routing-Einrichtung erfolgt typischerweise kabelgebunden, kann jedoch auch drahtlos erfolgen.

Von der Routing-Einrichtung kann eine Kommunikationsverbindung mit dem Cockpit, das heißt mit Flugdaten erfassenden Komponenten des Cockpits, erfolgen, um Flugdaten über die Antennen zu senden. Flugdaten sind zum Beispiel die Position, die Fluglage, die Fluggeschwindigkeit und/oder die Flughöhe des Flugzeugs. Die Flugdaten werden vorzugsweise automatisch in vorgegebenen Intervallen ausgesendet, um in einem Notfall die Position des Flugzeugs und dessen Flugzustand schnell erfassen zu können.

Alternativ oder ergänzend kann die Routing-Einrichtung per WLAN mit einem Lesegerät für Kredit- und/oder Bankkarten innerhalb der Passagierkabine kommunizieren, um Kredit- und/oder Bankkartendaten eines Passagiers während des Fluges zu verifizieren. Die von dem Kartenlesegerät erfassten Daten werden über die Routing-Einrichtung und die Antennen an die LEO-Satelliten übertragen und von dort an eine zuständige Bodenstation weitergeleitet, die die betreffenden Daten verifiziert. Dies kann genutzt werden, um einem Passagier einen Kauf einer Ware an Bord des Flugzeugs während des Fluges zu ermöglichen und die Ware dann nach der Landung am Flughafen zu übergeben.

Über die Antennen soll keine Kommunikation mit dem Internet erfolgen und insbesondere kein Screening von Audio- und/oder Videoinhalten erfolgen. Lediglich ausgewählte Daten, wie zum Beispiel Flugdaten, sollen übertragen werden. Dies ist mit Hilfe der im Nahbereich des Fensters positionierten Antennen möglich.

Dadurch ergibt sich der entscheidende Vorteil, dass die erfindungsgemäße Kommunikationseinrichtung auf einfache Weise schnell nachrüstbar ist und nicht die gängigen Zulassungsverfahren für fest in einem Großraumverkehrsflugzeug installierte Komponenten durchlaufen muss. Vielmehr stellen die erfindungsgemäßen Antennen und die Routing-Einrichtung "loose equipment" dar, für welches keine Zulassung erforderlich ist.

Ein weiterer Vorteil kann darin bestehen, dass eine Entkopplung von der von Passagieren genutzten Breitbandkommunikation, zum Beispiel beim Telefonieren während des Fluges oder beim Surfen im Internet, besteht. Die erfindungsgemäße Datenkommunikation ist dadurch besonders sicher, weil Passagiere keine Möglichkeit haben, in die Datenübertragung einzugreifen.

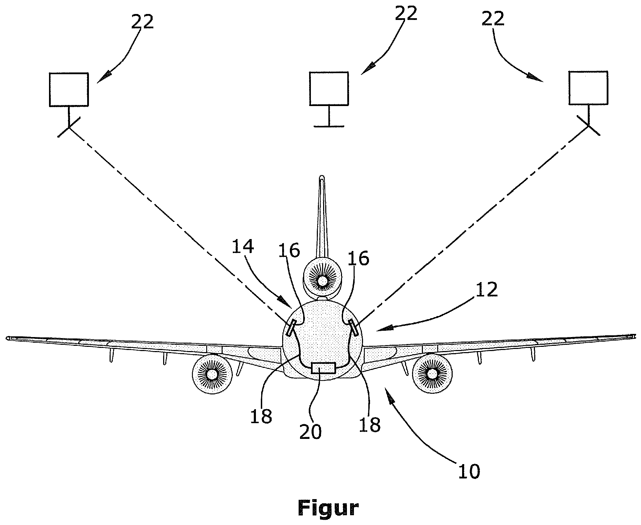

Im Folgenden wird anhand der Figur ein Ausführungsbeispiel der Erfindung näher erläutert.

Die Figur zeigt in schematisch vereinfachter Weise ein Großraumverkehrsflugzeug 10, bei dem es sich um ein Passagierflugzeug oder um ein Frachtflugzeug handeln kann. Im Bereich des Rumpfes sind auf einander gegenüberliegenden Seiten 12, 14 Fenster angeordnet. In mindestens einem Fenster der Passagierkabine oder des Frachtraums auf jeder Seite 12, 14 des Flugzeuges 10 ist eine Antenne 16 lösbar montiert. Die Antennen 16 sind mit Hilfe eines in den Figuren nicht dargestellten Adapterelements in den Ausschnitt des Fensterrahmens eingeklemmt.

Jede Antenne 16 ist über ein Kabel 18 mit einer Routing-Einrichtung 20 in Form eines WLAN-Modems verbunden. Die Routing-Einrichtung 20 ist zur Funkkommunikation (WLAN) mit einem Kreditkartenlesegerät innerhalb der Passagierkabine ausgebildet. Darüber hinaus ist das Modem 20 über eine in den Figuren nicht dargestellte Funkverbindung mit Flugdaten aufweisenden Geräten im Cockpit des Flugzeugs verbunden, um die Flugdaten über die Antennen 16 senden zu können. Ein Senden von Daten von der Routing-Einrichtung 20 in das Cockpit ist dabei aus Sicherheitsgründen ausgeschlossen.

Die Antennen 16 sind zur Funkkommunikation mit fliegenden Kommunikationshubs in Form von Iridiumsatelliten 22 ausgebildet. Jede der beiden Antennen 16 kommuniziert dabei mit einem anderen Satelliten 22 auf verschiedenen Seiten des Flugzeuges 10, so dass eine Kommunikation mit mindestens zwei Satelliten 22 zur selben Zeit erfolgt. Von den Satelliten 22 werden die übermittelten Daten auf herkömmlich Weise zu Bodenstationen übertragen und von dort zum Beispiel an eine Zentrale zur Erfassung der Flugdaten oder an eine Zentrale zur Überprüfung der Kreditkartendaten.

Ein entscheidender Aspekt der Erfindung ist darin zu sehen, dass die Vorrichtung in praktisch jedem Großraumverkehrsflugzeug auf einfache Weise nachgerüstet werden kann, ohne dass feste Verbindungen mit Teilen des Flugzeugs herzustellen sind. Die Antennen können jeweils in den Ausschnitt eines Fensterrahmens geklemmt werden und die Routing-Einrichtung 20 kann an einem beliebigen Ort im Flugzeug 10 positioniert werden. Denkbar ist auch eine Variante, dass jede der Antennen 16 mit einer eigenen Routing-Einrichtung 20 kommuniziert, wobei die Routing-Einrichtungen verschiedener Antennen kabellos miteinander kommunizieren.

## Patentansprüche

1. Verfahren zum positionsunabhängigen Senden und Empfangen von Daten mit einem Großraumverkehrsflugzeug (10), mit den Schritten:
Installieren mindestens einer Antenne (16), die zur Kommunikation mit einem fliegenden Kommunikationshub (22) ausgebildet ist, in dem Verkehrsflugzeug (10) im Nahbereich eines Fensters im Inneren des Flugzeugs,
Senden und/oder Empfangen der Daten zwischen mindestens der Antenne (16) und einem fliegenden Kommunikationshub (22) während des Fluges und
Übertragen der Daten innerhalb des Flugzeuges (10) zwischen der Antenne (16) und einer mit der Antenne (16) verbundenen Routing-Einrichtung (20),
**dadurch gekennzeichnet, dass**
die Antenne derart im Nahbereich des Fensters angebracht wird, dass eine direkte Sichtverbindung zwischen der Antenne (16) und dem Kommunikationshub (22) durch das Fenster hindurch besteht, so dass die zwischen der Antenne und dem Kommunikationshub übertragenen Funkwellen durch das Fenster hindurch übertragen werden.

2. Verfahren nach Anspruch 1, wobei auf einander gegenüberliegenden Seiten (12, 14) des Flugzeugs (10) jeweils mindestens eine Antenne (16) im Nahbereich eines Fensters installiert wird.

3. Verfahren nach Anspruch 1 oder 2, **dadurch gekennzeichnet, dass** jede Antenne (16) kabelgebunden mit der Routing-Einrichtung (20) verbunden ist und die Routing-Einrichtung (20) zur drahtlosen Kommunikation mit einer Datenquelle ausgebildet ist.

4. Verfahren nach Anspruch 1 oder 2, **dadurch gekennzeichnet, dass** jeder Antenne (16) eine mit der Antenne (16) kommunizierende Routing-Einrichtung (20) zugeordnet ist und die Routing-Einrichtung (20) zur drahtlosen Kommunikation mit einer Datenquelle ausgebildet ist.

5. Verfahren nach einem der vorhergehenden Ansprüche, **dadurch gekennzeichnet, dass** jede Antenne (16) im Nahbereich jeweils eines Fensters, das nicht einem Passagiersitzplatz fest zugeordnet ist, installiert wird.

6. Verfahren nach einem der vorhergehenden Ansprüche, **dadurch gekennzeichnet, dass** die Antenne (16) in einem Fenster einer Bordküche, eines Bord-WCs und/oder eines Notausgangs installiert wird.

7. Verfahren nach einem der vorhergehenden Ansprüche, **dadurch gekennzeichnet, dass** jede Antenne (16) lösbar aber fest an dem Fenster montiert wird.

8. Verfahren nach einem der vorhergehenden Ansprüche, **dadurch gekennzeichnet, dass** jede Antenne (16) in einem Abstand von maximal 10 cm derart an dem Fenster angebracht wird, dass von der Antenne (16) eine direkte Sichtverbindung durch das Fenster nach außen besteht.

9. Verfahren nach einem der vorhergehenden Ansprüche, **dadurch gekennzeichnet, dass** mit Antennen (16) auf verschiedenen Seiten des Verkehrsflugzeuges (10) eine Kommunikationsverbindung zu verschiedenen Kommunikationshubs (22) aufrecht erhalten wird.

10. Verfahren nach einem der vorhergehenden Ansprüche, **dadurch gekennzeichnet, dass** automatisch in regelmäßigen Abständen während des Fluges Flugdaten wie zum Beispiel Informationen über Position, Höhe und/oder Geschwindigkeit des Flugzeuges (10), über die Antenne (16) an einen Kommunikationshub (22) gesendet werden.

11. Verfahren nach dem vorhergehenden Anspruch, **dadurch gekennzeichnet, dass** aus dem Cockpit des Flugzeuges (10) eine sichere Datenverbindung über die Routing-Einrichtung (20) zu den Antennen (16) zum Senden der Flugdaten besteht, ohne dass Daten von der Routing-Einrichtung (20) in das Cockpit gesendet werden können.

12. Verfahren nach einem der vorhergehenden Ansprüche, **dadurch gekennzeichnet, dass** die Routing-Einrichtung (20) drahtlos mit einem Kredit- oder Bankkartenlesegerät innerhalb des Flugzeuges (10) kommuniziert.

13. Verfahren nach einem der vorhergehenden Ansprüche, **dadurch gekennzeichnet, dass** eine Kommunikation über die Antenne (16) mit dem Internet und insbesondere zum Streamen von/oder Audio- und Videodaten verhindert ist.

14. Verfahren nach einem der vorhergehenden Ansprüche, **dadurch gekennzeichnet, dass** der fliegende Kommunikationshub ein Satellit, zum Beispiel ein Low Earth Orbit (LEO)-Satellit, oder ein hochfliegendes Flugzeug (High Altitude Plane- HAP) ist.

## Claims

1. A method for position-independent transmission and receipt of data with a large-capacity passenger aircraft (10), **characterized by** the steps of:
installing at least one antenna (16) in the commercial aircraft (10) in close proximity of a window on the inside of the aircraft, said antenna being designed for communication with a flying communication hub (22),
transmitting and/or receiving the data between at least the antenna (16) and a flying communication hub (22) during flight, and
transmitting the data within the aircraft (10) between the antenna (16) and a routing means (20) connected with the antenna (16),
**characterized in that**
the antenna is mounted in close proximity of the window such that a direct visual connection exists between the antenna (16) and the communication hub (22) through the window, so that the radio waves transmitted between the antenna and the communication hub are transmitted through the window.

2. The method of claim 1, wherein at least one antenna (16) is installed, respectively, in close proximity of a window on opposite sides (12, 14) of the aircraft (10).

3. The method of claim 1 or 2, **characterized in that** each antenna (16) is connected by wire with the routing means (20), and the routing means is configured for wireless communication with a data source.

4. The method of claim 1 or 2, **characterized in that** each antenna (16) has a routing means (20) assigned thereto that communicates with the antenna (16), and the routing means (20) is configured for wireless communication with a data source.

5. The method of one of the preceding claims, **characterized in that** each antenna (16) is installed in close proximity of a respective window that is not fixedly assigned to a passenger seat.

6. The method of one of the preceding claims, **characterized in that** the antenna (16) is installed in a window of a galley, a lavatory and/or an emergency exit.

7. The method of one of the preceding claims, **characterized in that** each antenna (16) is mounted to the window in a detachable but fixed manner.

8. The method of one of the preceding claims, **characterized in that** each antenna (16) is mounted to the window at a distance of 10 cm at most, such that a direct visual contact exists from the antenna (16) outwards through the window.

9. The method of one of the preceding claims, **characterized in that** a communication link to different communication hubs (22) is maintained with antennas (16) on different sides of the commercial aircraft (10).

10. The method of one of the preceding claims, **characterized in that** flight data, such as, for example, information on position, altitude and/or speed of the aircraft (10), are transmitted automatically at regular intervals during flight to a communication hub (22) via the antenna (16).

11. The method of the preceding claim, **characterized in that** a secure data link exists from the cockpit of the aircraft (10) to the antennas (16) via the routing means (20) for the transmission of the flight data, without it being possible to transmit data from the routing means (20) into the cockpit.

12. The method of one of the preceding claims, **characterized in that** the routing means (20) communicates wirelessly with a credit card or bank card reader within the aircraft (10).

13. The method of one of the preceding claims, **characterized in that** communication with the Internet and in particular for streaming audio and/or video data via the antenna (16) is inhibited.

14. The method of one of the preceding claims, **characterized in that** the flying communication hub is a satellite, for example a Low Earth Orbit (LEO) satellite, or an aircraft flying at a high altitude (High Altitude Plane - HAP).

## Revendications

1. Procédé d'émission et de réception de données indépendamment de la position avec un avion commercial gros porteur (10), comprenant les étapes :
installation d'au moins une antenne (16), laquelle est réalisée pour la communication avec un hub de communication volant (22), dans l'avion commercial (10) à proximité d'un hublot à l'intérieur de l'avion,
émission et/ou réception des données entre au moins l'antenne (16) et un hub de communication volant (22) pendant le vol et
transmission des données à l'intérieur de l'avion (10) entre l'antenne (16) et un dispositif de routage (20) connecté à l'antenne (16),
**caractérisé en ce que**
l'antenne est agencée à proximité du hublot de telle façon qu'une liaison visuelle directe entre l'antenne (16) et le hub de communication (22) existe à travers le hublot, de sorte que les ondes radio transmises entre l'antenne et le hub de communication sont transmises à travers le hublot.

2. Procédé selon la revendication 1, dans lequel au moins une antenne (16) est respectivement installée sur des côtés (12, 14) de l'avion (10) opposés l'un à l'autre à proximité d'un hublot.

3. Procédé selon la revendication 1 ou 2, **caractérisé en ce que** chaque antenne (16) est connectée par câble au dispositif de routage (20) et le dispositif de routage (20) est réalisé pour la communication sans fil avec une source de donnée.

4. Procédé selon la revendication 1 ou 2, **caractérisé en ce que** chaque antenne (16) est associée à un dispositif de routage (20) communiquant avec l'antenne (16) et le dispositif de routage (20) est réalisé pour la communication sans fil avec une source de donnée.

5. Procédé selon l'une des revendications précédentes, **caractérisé en ce que** chaque antenne (16) est installée respectivement à proximité d'un hublot qui n'est pas associé de manière fixe à un emplacement de siège passager.

6. Procédé selon l'une des revendications précédentes, **caractérisé en ce que** l'antenne (16) est installée dans un hublot d'une cuisine de bord, de toilettes de bord et/ou d'une sortie de secours.

7. Procédé selon l'une des revendications précédentes, **caractérisé en ce que** chaque antenne (16) est montée de manière fixe mais amovible sur le hublot.

8. Procédé selon l'une des revendications précédentes, **caractérisé en ce que** chaque antenne (16) est agencée au hublot à une distance de 10 cm au maximum de telle sorte qu'une liaison visuelle directe à travers le hublot existe de l'antenne (16) vers l'extérieur.

9. Procédé selon l'une des revendications précédentes, **caractérisé en ce qu'**avec des antennes (16) sur différents côtés de l'avion commercial (10) une connexion de communication à différents hubs de communication (22) est maintenue.

10. Procédé selon l'une des revendications précédentes, **caractérisé en ce que** des données de vol comme par exemple des informations sur la position, l'altitude et/ou la vitesse de l'avion (10) sont envoyées automatiquement à intervalles réguliers pendant le vol à un hub de communication (22) par le biais des antennes (16).

11. Procédé selon l'une des revendications précédentes, **caractérisé en ce qu'**il existe une connexion de données sécurisée depuis le cockpit de l'avion (10) vers les antennes (16) par le biais du dispositif de routage (20) pour l'envoi des données de vol, sans que des données puissent être envoyées dans le cockpit depuis le dispositif de routage (20).

12. Procédé selon l'une des revendications précédentes, **caractérisé en ce que** le dispositif de routage (20) communique sans fil avec un appareil lecteur de carte bancaire ou de crédit à l'intérieur de l'avion (10).

13. Procédé selon l'une des revendications précédentes, **caractérisé en ce qu'**une communication avec le réseau Internet par le biais des antennes (16) est empêchée, en particulier pour le streaming audio et/ou vidéo.

14. Procédé selon l'une des revendications précédentes, **caractérisé en ce que** le hub de communication volant est un satellite, par exemple un satellite en orbite terrestre basse (LEO) ou une plateforme de haute altitude (HAP) .
